# EUROPÄISCHE PATENTSCHRIFT

(11) **EP 1 503 471 B1**
(45) Veröffentlichungstag und Bekanntmachung des Hinweises auf die Patenterteilung: **25.04.2007**
(21) Anmeldenummer: 04012172.5
(22) Anmeldetag: 22.05.2004
(51) Int. Cl.: H02G 3/08, H02G 15/013

(54) **Kabeldurchführungsplatte**
Cable feed-through plate
Plaque de traversée de câble

(30) Priorität: 22.07.2003 DE 10333499
(43) Veröffentlichungstag der Anmeldung: 02.02.2005
(73) Patentinhaber: Murrplastik Systemtechnik GmbH, 71570 Oppenweiler (DE)
(72) Erfinder: Sohn, Wolfgang, 71404 Korb (DE); Scharf-Martini, Lutz, 73614 Schorndorf (DE); Funk, Rainer, 71543 Wüstenrot (DE)
(74) Vertreter: WOLF & LUTZ

(56) Entgegenhaltungen:
- EP-A- 0 653 825
- DE-A1- 3 025 866
- DE-A1- 10 125 625
- DE-B- 1 065 055
- DE-C2- 19 731 448
- DE-U- 7 519 715
- GB-A- 1 388 916

## Beschreibung

Die Erfindung betrifft eine Kabeldurchführungsplatte gemäß dem Oberbegriff des Anspruchs 1.

Eine solche Kabeldurchführungsplatte ist aus der DE 197 31 448 C2 bekannt. Sie weist einen Rahmen auf, der aus zwei starren Rahmenteilen besteht, und der Rahmenöffnungen zur Durchführung von Kabeln aufweist. Zwischen den Rahmenteilen ist eine elastomere Trennwand angeordnet, die die Rahmenöffnungen teilweise verschließt. Die elastomere Trennwand weist ausgestanzte Öffnungen für jeweils ein Kabel auf, die beim Durchschieben der Kabel aufgeweitet werden, so dass die Trennwand eng an den Kabeln anliegt. Dadurch wird erreicht, dass die Rahmenöffnungen bei durchgeführten Kabeln abgedichtet sind; wenn die Kabel mit Zug beaufschlagt werden, wird die Trennwand gegen eine Rückhalteplatte gedrückt, so dass eine Zugentlastung erzielt wird. Wenn ein Kabel wieder herausgezogen wird, zieht sich die ausgestanzte Öffnung wieder zusammen, so dass die Rahmenöffnung auch ohne das Kabel annähernd dicht ist.

Die bekannte Kabeldurchführungsplatte hat jedoch den Nachteil, dass sich die elastomere Trennwand irreversibel verformt, wenn ein Kabel über längere Zeit durch sie hindurchgeführt ist. Wenn das Kabel aus der Rahmenöffnung entfernt wird, wird die ausgestanzte Öffnung nicht wieder vollständig geschlossen, und die Rahmenöffnung ist nicht mehr dicht. Desweiteren ist der Aufbau mit Rahmen, Trennwand und Rückhalteplatte relativ kompliziert.

Aus der DE 3025866 A1 ist eine Kunststoffdose mit Anschlussklemmen für Elektrokabel bekannt, die Durchführöffnungen für Kabel aufweist. An den Durchführöffnungen ist jeweils eine gelochte Membran angeordnet, wobei die Durchführöffnungen mittels Abschlussscheiben verschließbar sind. Aus der DE 1065055B ist ein wasserdichter Kasten für elektrische Verteilungsanlagen bekannt mit im Innern angebrachten Schraubenlöchern. Diese sind in einer Vertiefung angeordnet, die durch einen Deckel wasserdicht gegen das Kasteninnere abgedichtet ist.

Es ist daher Aufgabe der Erfindung, eine Kabeldurchführungsplatte der eingangs genannten Art derart weiterzuentwickeln, dass die Rahmenöffnungen durch einen einfachen Handgriff wieder dicht verschlossen werden können, wenn durchgeführte Kabel wieder entfernt werden.

Die Aufgabe wird erfindungsgemäß durch eine Kabeldurchführungsplatte mit den Merkmalen des Anspruchs 1 gelöst.

Der Erfindung liegt der Gedanke zugrunde, dass die Rahmenöffnungen durch die Stopfen abgedichtet sind, wenn kein Kabel durchgeführt ist. Zur Durchführung der Kabel werden die Stopfen entfernt. Die Trennwand liegt dann am Kabel an, dichtet die Rahmenöffnungen ab und bildet eine Zugentlastung für die Kabel. Wenn die Kabel wieder entfernt werden, werden zum Abdichten wieder die Stopfen in die Rahmenöffnungen eingesetzt. Indem mehrere Stopfen so an einer Stopfenplatte angeordnet sind, dass durch diese die Rahmenöffnungen gleichzeitig verschließbar sind, sind durch einen einzigen Handgriff alle Rahmenöffnungen durch ein Bauteil verschließbar.

Die Stopfen sind zweckmäßig formschlüssig in die Rahmenöffnung einklemmbar. Sie werden dann ohne weitere Hilfsmittel sicher in der Rahmenöffnung gehalten. Es ist von Vorteil, wenn die Stopfenplatte am Rahmen unverlierbar gehalten ist. Dabei wird besonders bevorzugt, dass sie mit dem Rahmen durch ein Filmscharnier verbunden ist. Zweckmäßig sind die Stopfenplatte und der Rahmen einstückig als Spritzgussteil ausgebildet.

Der Rahmen weist vorteilhaft ein vorderseitiges und ein rückseitiges Rahmenteil auf, die miteinander fest verbunden sind und zwischen denen die Trennwand eingelegt und gehalten ist. Dies vereinfacht die Herstellung der Kabeldurchführungsplatte. Die Trennwand wird einfach zwischen die beiden Rahmenteile eingelegt, die dann miteinander verbunden werden. Dabei ist die Trennwand vorzugsweise im Abstand zu einer Frontseite des vorderseitigen Rahmenteils angeordnet. Jeder Stopfen weist zweckmäßig eine Kappe auf, die sich über den gesamten Querschnitt der Rahmenöffnung erstreckt, sowie ein Eingriffselement, dass sich im Formschluß mit dem Rahmen von der Frontseite bis zur Trennwand erstreckt. Das Eingriffselement greift dann besonders tief in die Rahmenöffnung ein, so dass es durch den Formschluß sicher gehalten ist.

Um Kabel unterschiedlicher Durchmesser und Querschnittsformen aufnehmen zu können, sind die Durchtrittsöffnungen zweckmäßig elastisch aufweitbar. Die Querschnittsflächen der Rahmenöffnungen können alle dieselbe Größe aufweisen. Wenn durch die Kabeldurchführungsplatte unterschiedlich dicke Kabel durchzuführen sind, ist es jedoch von Vorteil, wenn die Rahmenöffnungen Querschnittsflächen unterschiedlicher Größe aufweisen.

Aus der Stopfenplatte können einzelne Stopfen heraustrennbar sein. Dies ermöglicht die Durchführung einzelner Kabel durch Heraustrennen und Entfernen einzelner Stopfen, während die übrigen Rahmenöffnungen durch die verbleibenden Stopfen der Stopfenplatte dicht verschlossen bleiben.

Im Folgenden wird die Erfindung anhand der in der Zeichnung schematisch dargestellten Ausführungsbeispiele näher erläutert. Es zeigen
- Fig. 1: ein Teil einer Kabeldurchführungsplatte im Bereich einer Rahmenöffnung im Schnitt.
- Fig. 2: den Schnitt gemäß Fig. 1 mit durchgeführtem Kabel.
- Fg. 3: eine schematische Darstellung einer erfindungsgemäßen Kabeldurchführungsplatte mit über ein Filmscharnier angelenkter Stopfenplatte.

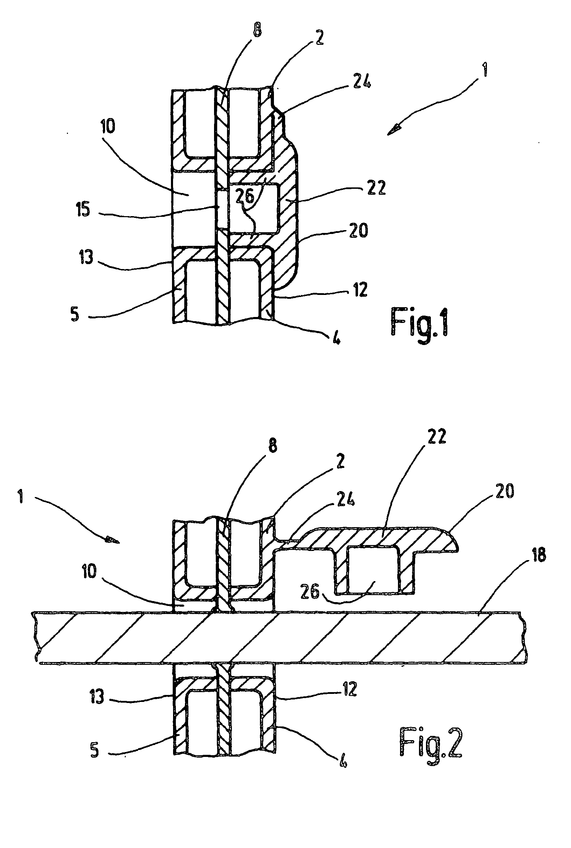

Eine Kabeldurchführungsplatte 1 weist einen starren Rahmen 2 aus Kunststoff auf, der ein vorderseitiges 4 und ein rückseitiges Rahmenteil 5 aufweist. Beide Rahmenteile 4, 5 sind fest miteinander verbunden, beispielsweise durch Schrauben, und zwischen ihnen ist eine elastomere Trennwand 8 eingespannt. Zur Durchführung von Kabeln weist der Rahmen 2 mehrere Rahmenöffnungen 10 auf, von denen in Fig. 1 und Fig. 2 nur eine abgebildet ist. Die Trennwand 8 durchspannt den Querschnitt jeder Rahmenöffnung 10 im Abstand sowohl zu einer Frontseite 12 des vorderseitigen Rahmenteils 4 als auch zu einer Rückseite 13 des rückseitigen Rahmenteils 5, läßt jedoch eine Durchtrittsöffnung 15 für ein Kabel 18 frei. Die Rahmenöffnung 10 ist bei nicht durchgeführtem Kabel (Fig. 1) durch einen von der Frontseite 12 her eingesteckten Stopfen 20 verschlossen. Der Stopfen 20 weist eine Kappe 22 auf, die die gesamte Querschnittsfläche der Rahmenöffnung 10 bedeckt und über ein Filmscharnier 24 mit dem vorderseitigen Rahmenteil 4 verbunden und damit unverlierbar am Rahmen 2 gehalten ist. An der Kappe 22 ist ein Eingriffselement 26 angeformt, dessen Außenkontur der Kontur der Rahmenöffnung 10 entspricht, so dass beim Einsetzen des Stopfens 20 in die Rahmenöffnung 10 ein Formschluß zwischen dem Eingriffselement 26 und dem Rahmen 2 entsteht. Das Eingriffselement 26 wird beim Einsetzen leicht zusammengedrückt, so dass der Stopfen 20 im eingesetzten Zustand aufgrund der elastischen Rückstellkraft des Eingriffselements 26 in der Rahmenöffnung 10 festgeklemmt ist. Dabei erstreckt sich das Eingriffselement 26 von der auf der Frontseite 12 aufliegenden Kappe 22 bis zur Trennwand 8.

Zur Durchführung eines Kabels 18 (Fig. 2) wird der Stopfen 20 aus der Rahmenöffnung 10 entfernt. Das Kabel 18 wird durch die Rahmenöffnung 10 und die Durchtrittsöffnung 15 in der Trennwand 8 durchgesteckt. Durch das Kabel 18, dessen Querschnittsfläche größer ist als die Querschnittsfläche der Durchtrittsöffnung 15, wird diese elastisch aufgeweitet und legt sich an die Umfangsfläche des Kabels 18 an, so dass auch bei entferntem Stopfen 20 eine Dichtwirkung erzielt wird. Desweiteren dient die am Kabel 18 anliegende Trennwand 8 als Zugentlastung für das Kabel 18.

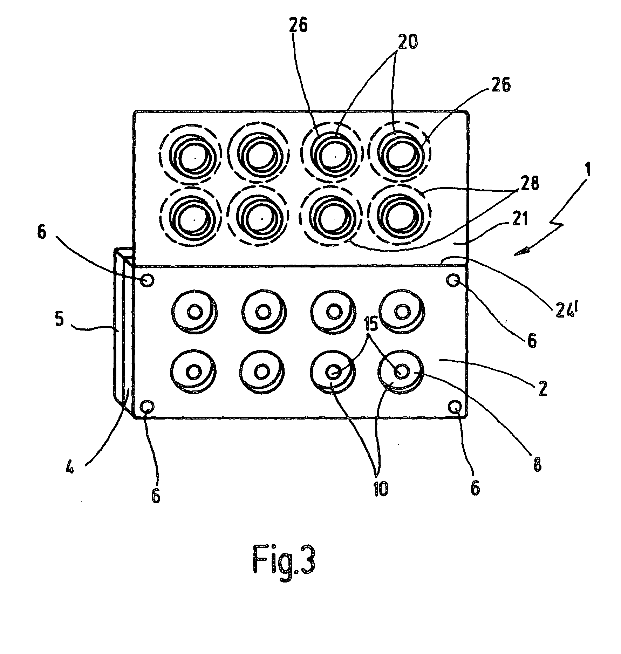

Eine erfindungsgemäße Kabeldurchführungsplatte 1 mit zugehörger Stopfenplatte 21 ist im Folgenden in Bezug auf Fig.3 beschrieben. Die Kabeldurchführungsplatte 1 weist einen starren Rahmen 2 mit einem vorderseitigen 4 und einem rückseitigen Rahmenteil 5 auf, die durch Schrauben 6 miteinander fest verbunden sind. Der Rahmen 2 weist acht Rahmenöffnungen 10 zum Durchführen von Kabeln auf. Zwischen den beiden Rahmenteilen 4, 5 ist eine elastomere Trennwand 8 eingespannt, die den Querschnitt jeder Rahmenöffnung 10 durchspannt und Durchtrittsöffnungen 15 für Kabel aufweist. Zum Abdichten der Rahmenöffnungen 10 ist eine Stopfenplatte 21 über ein Filmscharnier 24' angeformt, die acht einzelne Stopfen 20 trägt. Jeder Stopfen 20 weist entsprechend dem in Fig. 1 und Fig. 2 dargestellten ersten Ausführungsbeispiel ein Eingriffselement 26 auf, das formschlüssig in eine der Rahmenöffnungen 10 bis zur Trennwand 8 eingreift, wenn die Stopfenplatte um das Filmscharnier 24' auf den Rahmen 2 geklappt wird. Die einzelnen Stopfen 20 sind durch Perforationen 28 in der Stopfenplatte 21 einzeln heraustrennbar.

Die Kabeldurchführungsplatte 1 gemäß Fig. 3 weist einen Rahmen 2 mit acht gleich großen Rahmenöffnungen 10 auf. Es versteht sich jedoch von selbst, dass der Rahmen 2 auch mehr oder weniger Rahmenöffnungen aufweisen kann, die unterschiedlich groß sein können. Die Stopfen 20 der Stopfenplatte 21 sind dann in Zahl und Größe so an die Rahmenöffnungen 10 angepaßt, dass durch ein Umklappen der Stopfenplatte 21 um das Filmscharnier 24' die Rahmenöffnungen 10 durch die Stopfen 20 verschließbar sind.

### Zusammenfassend ist folgendes festzuhalten:

Die Erfindung betrifft eine Kabeldurchführungsplatte mit einem starren Rahmen 2, der mindestens eine Rahmenöffnung 10 zur Durchführung eines Kabels 18 aufweist, und mit einer den Querschnitt der Rahmenöffnung 10 durchspannenden elastomeren Trennwand 8, die eine Durchtrittsöffnung 15 für das Kabel 18 aufweist. Erfindungsgemäß ist ein Stopfen 20 vorgesehen, durch den die Rahmenöffnung 10 verschließbar ist.

## Patentansprüche

1. Kabeldurchführungsplatte mit einem starren Rahmen (2), der mehrere Rahmenöffnungen (10) zur Durchführung von Kabeln (18) aufweist, und mit einer den Querschnitt jeder der Rahmenöffnungen (10) durchspanrienden elastomeren Trennwand (8), die Durchtrittsöffnungen (15) für das Kabel (18) aufweist, **gekennzeichnet durch** eine Stopfenplatte (21), an der mehrere Stopfen (20) zum Verschließen der Rahmenöffnungen (10) angeordnet sind, und **durch** die zumindest ein Teil der Rahmenöffnungen (10) verschließbar ist.

2. Kabeldurchführungsplatte nach Anspruch 1, **dadurch gekennzeichnet, dass** die Stopfen (20) formschlüssig in die Rahmenöffnungen (10) einklemmbar sind.

3. Kabeldurchführungsplatte nach Anspruch 1 oder 2, **dadurch gekennzeichnet, dass** die Stopfenplatte (21) am Rahmen (2) unverlierbar gehalten ist.

4. Kabeldurchführungsplatte nach einem der vorangehenden Ansprüche, **dadurch gekennzeichnet, dass** die Stopfenplatte (21) mit dem Rahmen (2) durch ein Filmscharnier (24') verbunden ist.

5. Kabeldurchführungsplatte nach Anspruch 4, **dadurch gekennzeichnet, dass** die Stopfenplatte (21) und der Rahmen (2) einstückig als Spritzgussteil ausgebildet sind.

6. Kabeldurchführungsplatte nach einem der vorangehenden Ansprüche, **dadurch gekennzeichnet, dass** der Rahmen (2) ein vorderseitiges (4) und ein rückseitiges Rahmenteil (5) aufweist, die miteinander fest verbunden sind und zwischen denen die Trennwand (8) eingelegt und gehalten ist.

7. Kabeldurchführungsplatte nach Anspruch 6, **dadurch gekennzeichnet, dass** die Trennwand (8) im Abstand zu einer Frontseite (12) des vorderseitigen Rahmenteils (4) angeordnet ist.

8. Kabeldurchführungsplatte nach Anspruch 7, **dadurch gekennzeichnet, dass** jeder Stopfen (20) eine Kappe (22) aufweist, die sich bei in die Rahmenöffnung (10) eingeklemmtem Stopfen (20) über den gesamten Querschnitt der Rahmenöffnung (10) erstreckt, sowie ein Eingriffselement (26), das sich im Formschluß mit dem Rahmen (2) von der Frontseite (12) bis zur Trennwand (8) erstreckt.

9. Kabeldurchführungsplatte nach einem der vorangehenden Ansprüche, **dadurch gekennzeichnet, dass** die Durchtrittsöffnungen (15) elastisch aufweitbar sind.

10. Kabeldurchführungsplatte nach einem der vorangehenden Ansprüche, **dadurch gekennzeichnet, dass** im Rahmen (2) Rahmenöffnungen (10) mit Querschnittsflächen unterschiedlicher Größe angeordnet sind.

11. Kabeldurchführungsplatte nach einem der vorangehenden Ansprüche, **dadurch gekennzeichnet, dass** einzelne Stopfen (20) aus der Stopfenplatte (21) heraustrennbar sind.

## Claims

1. Cable feed-through plate with a rigid frame (2), which has several frame openings (10) for leading cables (18) through, and with an elastomer partition (8) that bridges the cross section of each of the frame openings (10) and has penetration holes (15) for the cable (18), **characterized by** a stopper plate (21), on which several plugging stoppers (20) are arranged for sealing the frame openings (10), and by means of which at least some of the frame openings (10) can be sealed.

2. Cable feed-through plate according to Claim 1, **characterized in that** the plugging stoppers (20) can be squeezed into the frame openings (10) with positive locking.

3. Cable feed-through plate according to Claim 1 or 2, **characterized in that** the stopper plate (21) is held captive on the frame (2).

4. Cable feed-through plate according to any one of the preceding claims, **characterized in that** the stopper plate (21) is joined to the frame (2) by a film hinge (24').

5. Cable feed-through plate according to Claim 4, **characterized in that** the stopper plate (21) and the frame (2) are formed as a single injection-moulded piece.

6. Cable feed-through plate according to any one of the preceding claims, **characterized in that** the frame (2) has a front (4) and a rear frame part (5), which are firmly connected together and between which the partition (8) is inserted and held.

7. Cable feed-through plate according to Claim 6, **characterized in that** the partition (8) is arranged at a distance from a front side (12) of the front frame part (4).

8. Cable feed-through plate according to Claim 7, **characterized in that** each plugging stopper (20) has a cap (22), which bridges the entire cross section of the frame opening (10) when plugging stoppers (20) are firmly clamped into the frame opening (10), as well as an engaging element (26) which, being positively locked with the frame (2), extends from the front side (12) as far as the partition (8).

9. Cable feed-through plate according to any one of the preceding claims, **characterized in that** the penetration holes (15) are flexibly expandable.

10. Cable feed-through plate according to any one of the preceding claims, **characterized in that** frame openings (10) with cross-section areas of different sizes are arranged in the frame (2).

11. Cable feed-through plate according to any one of the preceding claims, **characterized in that** individual plugging stoppers (20) can be pushed out of the stopper plate (21).

## Revendications

1. Plaque de traversée de câbles, comprenant un cadre rigide (2) muni de plusieurs orifices (10) de passage traversant de câbles (18) ; et une cloison séparatrice (8) en élastomère, couvrant la section transversale de chacun des orifices (10) du cadre, et dotée d'orifices (15) de passage du câble (18), **caractérisée par** une platine d'occultation (21) sur laquelle plusieurs bouchons (20) sont disposés en vue d'obturer les orifices (10) du cadre, et par l'intermédiaire de laquelle au moins une partie desdits orifices (10) du cadre peut être obturée.

2. Plaque de traversée de câbles, selon la revendication 1, **caractérisée par le fait que** les bouchons (20) peuvent être coincés, par concordance de formes, dans les orifices (10) du cadre.

3. Plaque de traversée de câbles, selon la revendication 1 ou 2, **caractérisée par le fait que** la platine d'occultation (21) est retenue sur le cadre (2) de manière imperdable.

4. Plaque de traversée de câbles, selon l'une des revendications précédentes, **caractérisée par le fait que** la platine d'occultation (21) est reliée au cadre (2) par l'intermédiaire d'une charnière pelliculaire (24').

5. Plaque de traversée de câbles, selon la revendication 4, **caractérisée par le fait que** la platine d'occultation (21) et le cadre (2) sont réalisés d'un seul tenant, en tant que pièce moulée par injection.

6. Plaque de traversée de câbles, selon l'une des revendications précédentes, **caractérisée par le fait que** le cadre (2) comprend des parties d'encadrement antérieure (4) et postérieure (5) qui sont reliées rigidement l'une à l'autre, et entre lesquelles la cloison séparatrice (8) est interposée et retenue.

7. Plaque de traversée de câbles, selon la revendication 6, **caractérisée par le fait que** la cloison séparatrice (8) se trouve à distance d'une face frontale (12) de la partie d'encadrement (4) antérieure.

8. Plaque de traversée de câbles, selon la revendication 7, **caractérisée par le fait que** chaque bouchon possède une coiffe (22) qui s'étend sur toute la section transversale de l'orifice (10) du cadre lorsque ledit bouchon (20) est coincé dans ledit orifice (10) du cadre ; ainsi qu'un élément de pénétration (26) s'étendant depuis la face frontale (12) jusqu'à la cloison séparatrice (8) lorsqu'il est assemblé avec le cadre (2) par concordance de formes.

9. Plaque de traversée de câbles, selon l'une des revendications précédentes, **caractérisée par le fait que** les orifices de passage (15) peuvent être évasés élastiquement.

10. Plaque de traversée de câbles, selon l'une des revendications précédentes, **caractérisée par le fait que** des orifices (10), présentant des superficies de section transversale de tailles différentes, sont pratiqués dans le cadre (2).

11. Plaque de traversée de câbles, selon l'une des revendications précédentes, **caractérisée par le fait que** des bouchons individuels (20) peuvent être dissociés d'avec la platine d'occultation (21).
